# FASCICULE DE BREVET EUROPEEN

(11) **EP 2 349 621 B1**
(45) Date de publication et mention de la délivrance du brevet: **03.10.2012**
(21) Numéro de dépôt: 09755970.2
(22) Date de dépôt: 06.10.2009
(51) Int. Cl.: B23D 51/01, B23D 51/12

(54) **MONTURE DE SCIE À ARCHET ET SCIE À ARCHET CORRESPONDANTE**
BOGENSÄGEMONTAGE UND ENTSPRECHENDE BOGENSÄGE
BOW SAW MOUNTING AND CORRESPONDING BOW SAW

(30) Priorité: 27.10.2008 FR 0857274
(43) Date de publication de la demande: 03.08.2011
(73) Titulaire: BOST GARNACHE INDUSTRIES, 39600 Arbois (FR)
(72) Inventeur: POILLOT, Anthony, F-25000 Besancon (FR); PANIER, Christophe, F-25000 Besancon (FR)
(74) Mandataire: Jacobson, Claude
(86) Numéro de dépôt international: PCT/FR2009/051898
(87) Numéro de publication internationale: WO 2010/049616

(56) Documents cités:
- DE-C- 962 018
- FR-E- 33 966
- GB-A- 531 403
- US-A- 1 538 501
- US-A- 2 742 936
- US-A- 2 747 631
- US-B1- 6 772 522

## Description

La présente invention est relative à une monture de scie à archet du type décrit dans le préambule de la revendication 1. Une telle monture est connue du document US 6,772,522 B1.

Les documents FR-A-2 702 167 et EP-A-0 544 574 montrent des exemples de montures de scie de ce type.

L'invention a pour but de permettre d'utiliser de telles montures de scie non seulement dans la prise habituelle « revolver », qui procure une puissance de sciage élevée, mais également dans une prise dite « d'ajustage » adaptée pour un sciage de précision.

A cet effet, l'invention a pour objet une monture de scie du type précité, caractérisé par la partie caractérisante de la revendication 1.

La monture de scie suivant l'invention peut comporter une ou plusieurs des caractéristiques décrites dans les revendications 2 à 13.

L'invention a également pour objet une scie à archet comprenant une monture de scie telle que définie plus haut, et au moins une lame de scie adaptée pour être accrochée auxdits organes avant et arrière d'accrochage.

Un exemple de réalisation de l'invention va maintenant être décrit en regard des dessins annexés, sur lesquels :

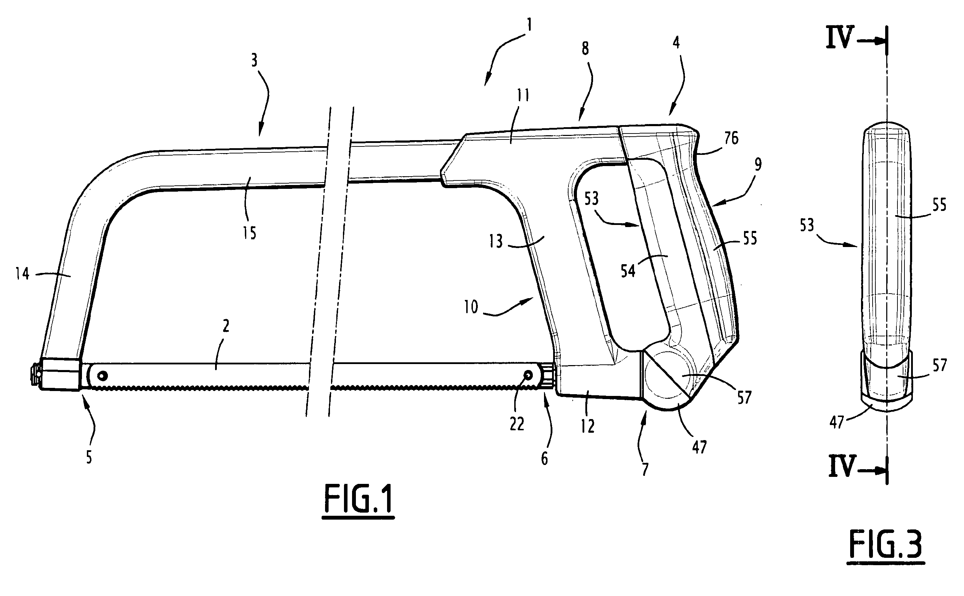

- la Figure 1 est une vue en élévation d'une scie à archet suivant l'invention ;
- la Figure 2 est une vue en perspective éclatée de la partie arrière de la scie de la Figure 1 ;
- la Figure 3 est une vue de l'arrière de la scie ;
- la Figure 4 est une vue en coupe de la partie arrière de la scie, suivant la ligne IV-IV de la Figure 3 ;
- les Figures 5 et 6 sont des vues prises en coupe suivant les lignes V-V et VI-VI, respectivement, de la Figure 4 ;
- la Figure 7 est une vue de la partie arrière de la scie, en élévation et avec arrachement, illustrant la prise « revolver » ;
- la Figure 8 est une vue analogue à la Figure 7, illustrant la prise d'ajustage.

La scie à archet représentée aux dessins comprend une monture 1 qui porte une lame de scie 2. La monture 1 comprend un archet 3 solidaire d'une poignée arrière 4, un organe d'accrochage avant 5 et un organe d'accrochage arrière 6. La lame est accrochée aux organes 5 et 6 et est tendue au moyen d'un mécanisme de tension 7 incorporé dans la poignée.

La poignée comprend une partie fixe avant 8 et une partie arrière mobile 9.

La partie fixe 8 comprend un carter monobloc 10 qui présente une partie supérieure 11 sensiblement horizontale, une partie inférieure 12 sensiblement horizontale qui contient le mécanisme de tension 7, et une poutre avant 13 reliant les parties 11 et 12. La poutre 13 est faiblement inclinée vers l'arrière et vers le bas, d'environ 20°.

L'archet 3 est monobloc et tubulaire, à section sensiblement rectangulaire. Il a une forme générale en L, avec une branche avant 14 faiblement inclinée vers l'avant et vers le bas, d'environ 20°, et une branche supérieure 15 sensiblement horizontale dont l'extrémité arrière est encastrée dans la partie supérieure 11 de la poignée, dans le prolongement de celle-ci.

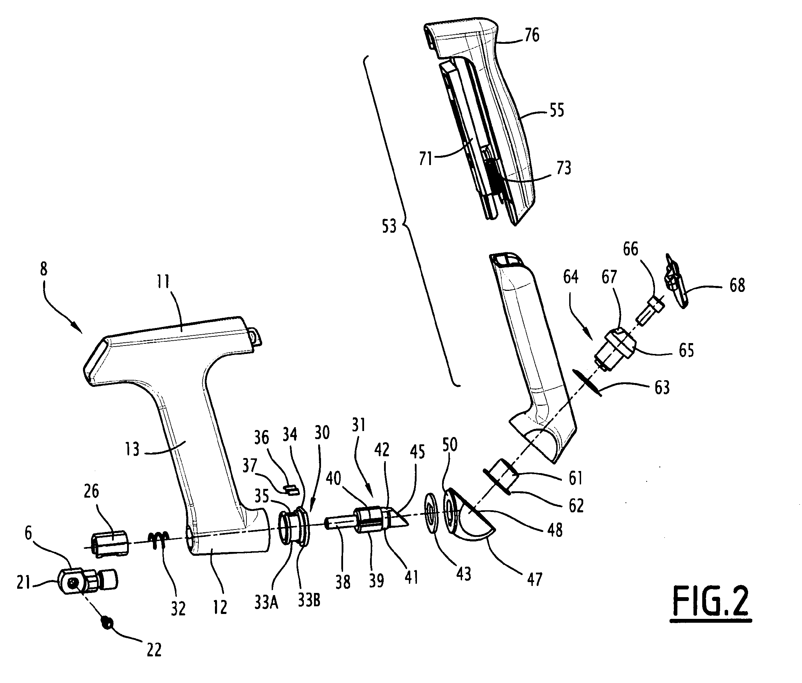

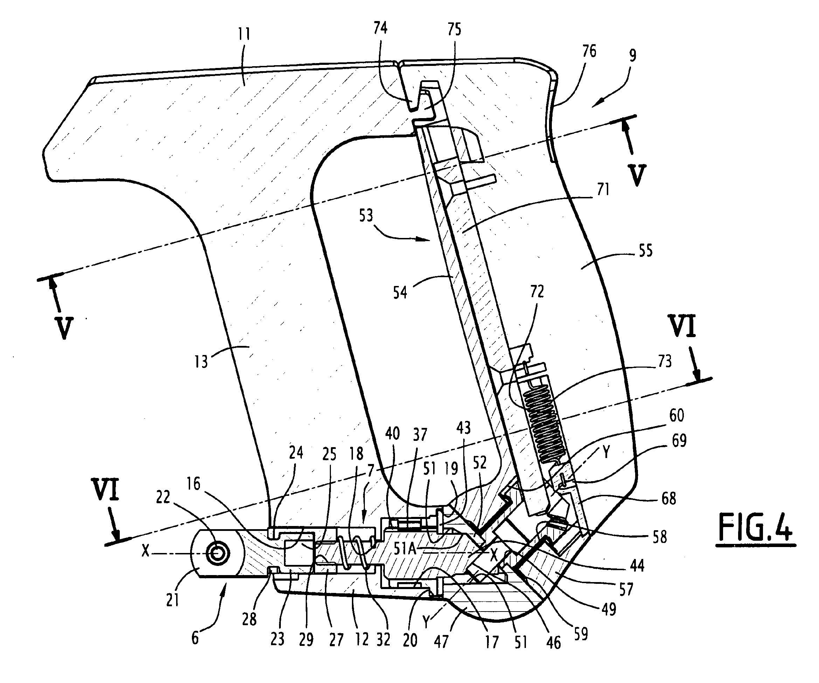

Comme on le voit aux Figures 2 et 4, dans la partie inférieure 12 sont ménagés par l'avant un alésage 16 à section non circulaire, ici octogonale, et par l'arrière un alésage 17 à section circulaire de relativement grand diamètre. La paroi de fond mitoyenne de ces deux alésages est percée d'un trou circulaire 18 de petit diamètre. L'entrée de l'alésage 17 comporte un premier lamage 19 circulaire, puis un second lamage 20 présentant un méplat d'accrochage.

L'organe d'accrochage arrière 6 est une pièce qui comprend un plat avant 21 muni d'une goupille 22 d'accrochage de la lame, et une queue arrière 23 pourvue d'une gorge extérieure 24 et d'un alésage borgne 25 ménagé à partir de son extrémité.

Dans l'alésage 16 est inséré, au jeu près, un coulisseau creux 26 à section extérieure octogonale muni d'un flasque arrière 27 et d'un flasque avant 28 fendu. Le flasque arrière présente un orifice axial taraudé 29.

La queue 23 de l'organe d'accrochage 6 s'insère librement dans l'évidement du coulisseau, dont le flasque avant 28 est reçu dans la gorge 24. Ainsi, l'organe 6 est solidaire axialement du coulisseau mais peut tourner librement par rapport à celui-ci. L'alésage 25 de la queue 23 a un diamètre légèrement supérieur à celui de l'orifice taraudé 29.

Le mécanisme de tension 7 comprend également une douille de freinage 30, une vis de tension 31 et un ressort hélicoïdal 32.

La douille 30 comporte un fût creux avant 33A et une collerette arrière étagée 33B dont la partie arrière présente un méplat 34, ce qui lui permet d'être parfaitement positionnée dans le lamage 20 de l'alésage 17. A mi-longueur du fût 33A, la douille est pourvue d'une lumière 35 dans laquelle est positionné un ressort à lame ondulée 36. L'onde centrale 37 de ce ressort fait saillie vers l'intérieur du fût 33A à travers la lumière 35.

La vis de tension 31 comporte une tige avant filetée 38 qui traverse l'orifice 18 et est vissée dans l'orifice taraudé 29 du coulisseau. A l'intérieur de l'alésage 16, cette tige est entourée du ressort hélicoïdal 32, lequel est comprimé entre le fond de cet alésage et le flasque arrière 27 du coulisseau.

Dans l'alésage 17, la tige 38 se prolonge par une partie cylindrique 39 de plus grand diamètre qui coulisse dans la douille 30. Cette partie 39 est pourvue de plusieurs rainures longitudinales 40 à section en V, au nombre de trois dans cet exemple, adaptées pour recevoir par encliquetage l'onde centrale 37 du ressort 36.

A l'arrière de la partie cylindrique 39, la vis de tension 31 comprend une partie cylindrique 41 de diamètre légèrement réduit, munie d'un méplat 42. Cette partie 41 coopère avec l'orifice central conjugué d'une rondelle 43 reçue dans le lamage d'entrée 19 de l'alésage 17.

La vis 31 se termine par une partie de manoeuvre 44 cylindrique, de diamètre encore légèrement réduit, tronquée par une face plane 45 inclinée à 45° par rapport à l'axe X-X de la vis. Cet axe X-X constitue l'axe général de sciage.

La face 45 est traversée par un alésage 46 d'axe Y-Y qui lui est perpendiculaire.

La partie mobile 9 de la poignée comprend une première demi-rotule 47 dont la face diamétrale 48 est perpendiculaire à l'axe Y-Y et est percée d'un orifice 49. Cette demi-rotule comporte une face avant 50 perpendiculaire à l'axe X-X, appliquée sur la face arrière de la partie inférieure 12 de la poignée ou sur la rondelle 43. A partir de cette face avant, la première demi-rotule comporte un alésage 51 d'axe X-X qui se termine à une faible distance de la face arrière 48 par un méplat 51A apte à coopérer avec le méplat 42 de la vis 31. Ainsi, la face arrière 48 est matérialisée par une paroi arrière 52 avec laquelle la face plane inclinée 45 de la vis 31 coopère. Ainsi, cette vis et la demi-rotule 47 sont solidaires en rotation par l'intermédiaire des méplats 42 et 51A, et la vis est immobilisée axialement entre la paroi 52 et le fond de l'alésage 17. De cette manière, la rotation de la vis entraîne le coulisseau 26 et l'organe d'accrochage 6 en translation suivant l'axe X-X.

La partie 9 de la poignée comprend également une poutre arrière 53 montée rotative, par une première extrémité, par rapport à la demi-rotule 47 autour de l'axe Y-Y. Elle comprend également des moyens pour indexer la poutre arrière autour de cet axe Y-Y et pour solidariser sélectivement l'autre extrémité de cette dernière à la partie supérieure fixe 11 de la poignée.

Dans cette position solidarisée, la poutre arrière s'étend sensiblement parallèlement à la poutre avant 13, et sa surface extérieure prolonge de tous côtés celle de la partie fixe 8 et de la demi-rotule 47. La poignée est alors fonctionnellement identique à une poignée monobloc classique à prise « revolver » comme celle du FR-A-2 702 167 précité, et sera décrite ci-dessous dans cette position.

La poutre arrière 53 est constituée essentiellement d'un support 54 et d'une coiffe de verrouillage/déverrouillage 55 montée coulissante sur le support 54.

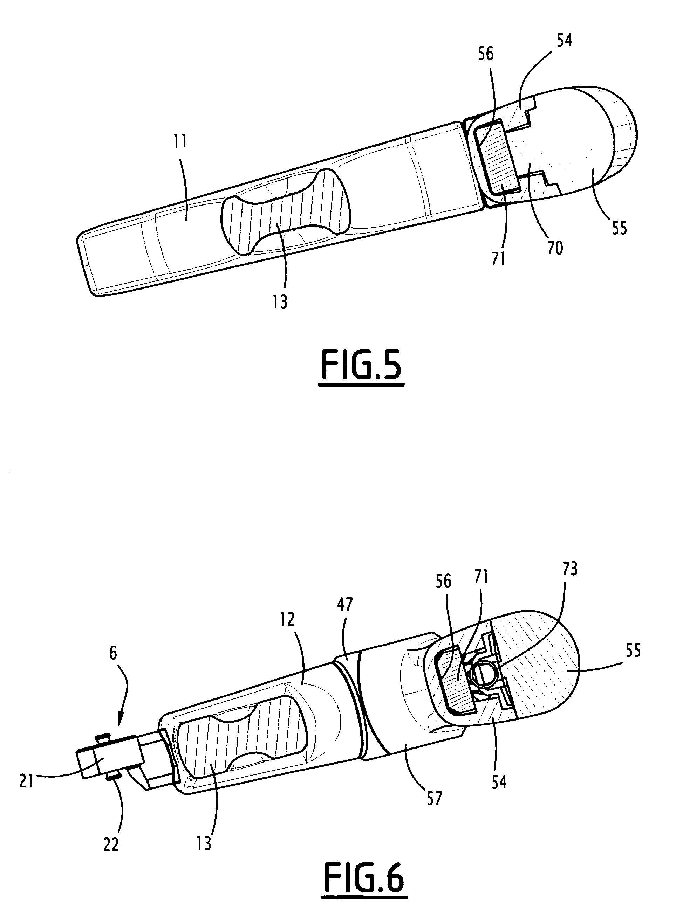

Le support 54 est rectiligne dans sa partie courante, avec une section en forme générale de C définissant une glissière 56 (Figures 5 et 6).

Son extrémité coudée vers l'avant forme une seconde demi-rotule 57 percée d'un alésage 58 d'axe Y-Y. Cet alésage est muni à son extrémité inférieure d'un lamage 59 et, à son extrémité supérieure, qui débouche dans la glissière 56, d'un élargissement 60.

Un palier 61 est positionné dans l'alésage 58. Ce palier possède une collerette 62 reçue dans le lamage 59.

Une rondelle élastique 63 est disposée au fond de l'élargissement 60, puis une douille à deux gradins 64 est introduite par l'extérieur dans le palier 61. La partie d'extrémité avant, de petit diamètre, de cette douille est reçue dans l'orifice 49, sans dépasser de celui-ci vers l'avant, tandis que la tête 65 de la douille 64 vient prendre appui sur la rondelle élastique 63. Une vis de fixation 66 vient enfin traverser la douille 64 et se visser dans l'alésage taraudé 46 de la vis de tension 31.

Ainsi, les deux demi-rotules sont appliquées l'une contre l'autre, par leurs faces diamétrales adjacentes, avec possibilité de rotation autour de l'axe Y-Y, et sont solidaires de la vis de tension 31 autour de l'axe X-X. De plus, grâce au ressort hélicoïdal 32, la demi-rotule 47 reste en permanence plaquée contre la partie fixe 8 de la poignée.

La tête 65 de la douille 64 est pourvue de deux encoches 67 diamètralement opposées.

Le support 54 comporte en outre, juste derrière la tête de la douille 64, un obturateur rapporté 68 muni d'une lumière d'accrochage 69.

La coiffe 55 est pourvue sur l'essentiel de sa longueur d'une nervure 70 (Figure 5) sur laquelle est fixée une réglette plate 71. A son extrémité inférieure, la coiffe comporte, côté avant, un évidement 72 ouvert vers le bas. Dans cet évidement est logé un ressort hélicoïdal de rappel 73 tendu entre le fond de l'évidement 72 et l'obturateur 68.

A son extrémité supérieure, la coiffe présente un crochet 74 destiné à coopérer avec un crochet conjugué 75 prévu à l'extrémité arrière de la partie supérieure 11 de la poutre avant 13.

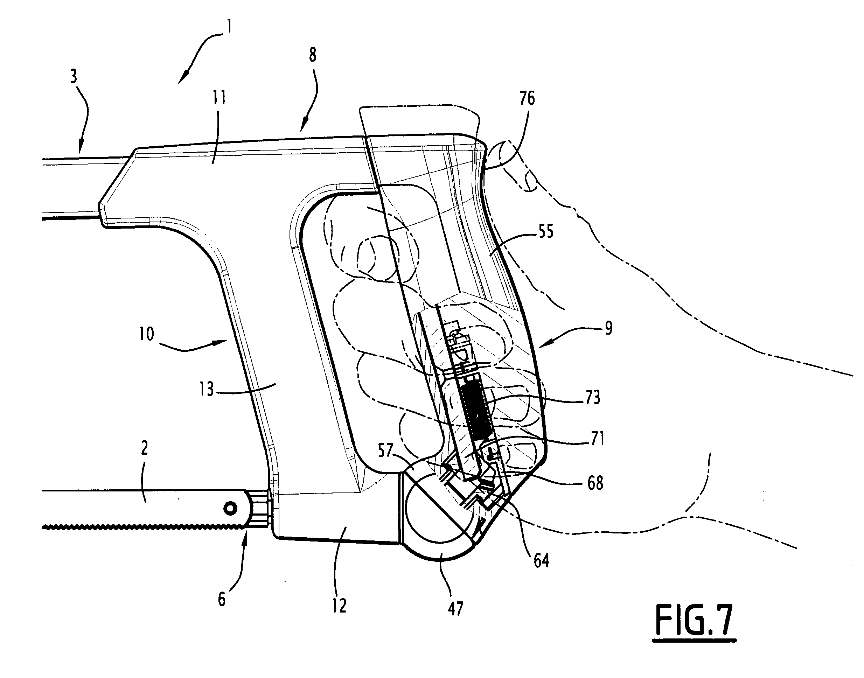

Au repos (Figures 4 à 6), sous l'action du ressort 73, les crochets 74 et 75 coopèrent pour maintenir la partie arrière 9 de la poignée dans la position « revolver » représentée. Comme représenté sur la Figure 7, la poignée peut alors être saisie de façon classique pour réaliser un sciage de puissance.

Dans cette position, l'extrémité inférieure de la réglette 71 pénètre dans l'encoche supérieure 67 de la tête 65 de la douille 64, et le pouce de l'utilisateur est reçu dans un évidement arrière 76 prévu à l'extrémité supérieure de la coiffe.

Pour changer la position de la partie arrière 9, l'utilisateur pousse la coiffe vers le haut, par exemple avec son pouce, à l'encontre du ressort 73. Le crochet 74 se libère du crochet 75, et la réglette 71 sort de l'encoche 67.

La partie arrière 9 peut alors pivoter de 180° autour de l'axe Y-Y jusqu'à ce que la réglette se trouve en regard de l'encoche 67 inférieure. Dans ce mouvement, grâce au freinage assuré par l'encliquetage de l'onde 37 du ressort 36 dans la rainure 40, la vis de tension 31 reste immobile.

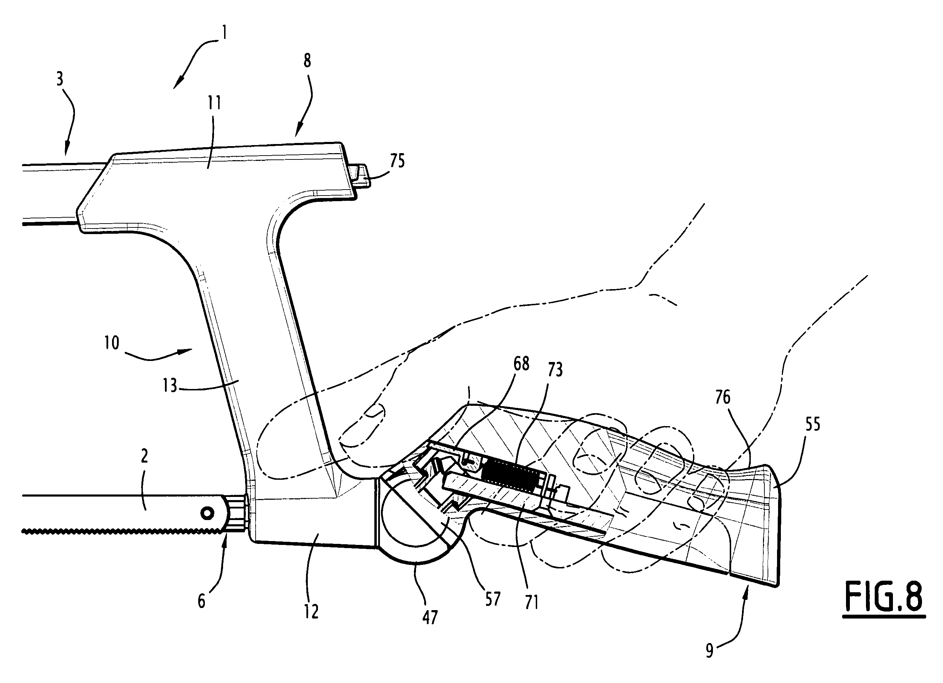

A la fin de ce mouvement, sous l'effet du ressort 73, la réglette pénètre alors dans cette nouvelle encoche, de sorte que la partie arrière 9 est de nouveau solidaire de la douille 64. Toutefois, la partie arrière 9 se trouve maintenant dans la position de la Figure 8, sensiblement dans le prolongement de la partie inférieure 12 de la partie fixe de la poignée, c'est-à-dire sensiblement parallèlement à l'axe X-X, c'est-à-dire sensiblement suivant la direction axiale de sciage définie par la lame 2.

L'utilisateur peut alors saisir la partie arrière 9 selon une prise dans laquelle la main s'étend sensiblement dans l'alignement de l'avant-bras (prise dite d'ajustage), et réaliser un sciage de précision, par exemple pour amorcer une entaille dans une pièce à scier.

Dans cette position, un mouvement de torsion exercé sur la partie arrière 9 autour de l'axe X-X surmonte l'effort résistant de l'encliquetage 37-40 et entraîne ainsi la partie 9, la demi-rotule avant 47 et la vis de tension 31 d'un seul bloc autour de l'axe X-X, ce qui provoque le déplacement longitudinal du coulisseau 26. Cette action permet donc le réglage de la tension de la lame.

Il est à noter que grâce à la présence du frein 36-40 de la vis de tension, le réglage de tension n'est possible que lorsque la réglette 71 est en prise avec une encoche 67, et plus précisément, du fait de la présence des crochets 74 et 75, avec l'encoche 67 inférieure.

En variante, la douille 64 peut comporter plus de deux encoches 67, par exemple quatre encoches, ce qui permet d'obtenir des positions supplémentaires de la partie arrière 9 de la poignée.

En variante également, l'archet 3 peut être d'une seule pièce avec la partie avant 8 de la poignée.

L'invention s'applique également aux montures de scies ayant un archet courbe.

## Revendications

1. Monture de scie à archet, du type comprenant
- un archet (3) solidaire d'une poignée arrière (4);
- un organe avant d'accrochage (5) relié à l'archet et destiné à accrocher l'extrémité distale d'une lame de scie (2), l'organe avant étant prévu à l'extrémité avant de la monture ;
- un organe arrière d'accrochage (6) relié à la poignée et destiné à accrocher l'extrémité proximale de la lame de scie, l'organe arrière étant prévu à l'extrémité arrière de la monture ; et
- un mécanisme (7) de mise en tension d'une lame de scie lorsque celle-ci est accrochée aux organes d'accrochage avant et arrière ;
les organes avant et arrière d'accrochage définissant entre eux une direction axiale de sciage selon laquelle s'étend la lame de scie lorsque celle-ci est accrochée aux organes d'accrochage avant et arrière,
la poignée arrière comportant une poutre avant de liaison (13) et une poutre arrière de préhension (53),
**caractérisée en ce que** la poutre arrière (53) comprend une première extrémité articulée sur la partie d'extrémité inférieure (12) de la poutre avant (13) de manière à ce que la poutre arrière de préhension (53) soit mobile entre une première position de préhension de type « revolver » adaptée pour un sciage en puissance, dans laquelle la deuxième extrémité de la poutre arrière est sensiblement dans le prolongement de la partie arrière (15) de l'archet (3), et une deuxième position de préhension de type « ajustage » adaptée pour un sciage de précision, dans laquelle la deuxième extrémité de la poutre arrière est distante du prolongement de la partie arrière de l'archet.

2. Monture de scie selon la revendication 1, **caractérisée en ce que** l'articulation de la poutre arrière (53) comprend un pivot (64) dont l'axe (Y-Y) est perpendiculaire à un plan de joint, lui-même incliné par rapport à la direction axiale de sciage.

3. Monture de scie selon la revendication 2, **caractérisée en ce que** l'inclinaison du plan de joint par rapport à la direction axiale de sciage est d'environ 45°.

4. Monture de scie selon l'une quelconque des revendications 1 à 3, **caractérisée en ce que** la poutre avant (13) et la poutre arrière (53) comportent des moyens d'indexage mutuel (67, 71) adaptés pour coopérer de manière à indexer la poutre arrière dans la première position de préhension ou dans la deuxième position de préhension.

5. Monture de scie selon l'une quelconque des revendications 1 à 4, **caractérisée en ce que** le mécanisme (7) de mise en tension d'une lame de scie comprend des moyens de réglage du dispositif de tension activables par action sur la poutre arrière de poignée lorsque celle-ci est dans la deuxième position, notamment activables par rotation autour d'un axe (X-X) parallèle à la direction axiale de sciage.

6. Monture de scie selon les revendications 4 et 5 prises ensemble, **caractérisée en ce que** le mécanisme de mise en tension (7) comprend des moyens de freinage (37, 40) qui lui confèrent un couple résistant supérieur à celui de l'articulation de la poutre arrière (53) lorsque les moyens d'indexage (67, 71) sont libérés.

7. Monture de scie selon la revendication 6, **caractérisée en ce que** les moyens de freinage comprennent des reliefs d'encliquetage (40) du mécanisme de mise en tension qui coopèrent avec un moyen de retenue (36) sollicité élastiquement, solidaire de la poutre avant (13).

8. Monture de scie selon l'une des revendications 1 à 7, **caractérisée en ce qu'**elle comprend des moyens de verrouillage réversibles (74, 75) solidarisant la deuxième extrémité de la poutre arrière (53) à la partie supérieure (11) de la poutre avant (13).

9. Monture de scie selon la revendication 8, **caractérisée en ce que** la poutre arrière (53) comprend un support (54) articulé à la partie d'extrémité inférieure (12) de la poutre avant (13), et une coiffe (55) d'appui pour la paume de la main, mobile par rapport audit support (54) entre une position de solidarisation de la coiffe avec la partie supérieure (11) de la poutre avant (13), et une position de libération de la coiffe.

10. Monture de scie selon la revendication 9, **caractérisée en ce que** la coiffe (55) est mobile en translation par rapport audit support (54).

11. Monture de scie selon la revendication 9 ou 10, **caractérisée en ce qu'**un moyen de sollicitation (73), notamment un ressort de traction, sollicite élastiquement la coiffe (55) d'appui par rapport audit support (54), et met en prise les moyens de verrouillage (74, 75) lorsque la poutre arrière (53) est disposée dans ladite première position.

12. Monture de scie selon l'une quelconque des revendications 1 à 11, **caractérisée en ce que** l'articulation de la poutre arrière (53) est adaptée pour permettre de positionner la poutre arrière dans au moins une troisième position de préhension différente desdites première et seconde positions.

13. Monture de scie selon l'une quelconque des revendications 1 à 12, **caractérisée en ce que** l'archet (3) et la poutre avant (13) sont venus de matière d'un seul bloc, notamment en aluminium moulé.

14. Scie à archet, **caractérisée en ce qu'**elle comprend une monture de scie (1) suivant l'une quelconque des revendications 1 à 13, et au moins une lame de scie (2) adaptée pour être accrochée auxdits organes avant (5) et arrière (6) d'accrochage.

## Claims

1. Bow-saw frame of the type comprising :
- a bow (3) which is integral with a rear handle (4) ;
- a front coupling component (5) which is connected to the bow and is intended to couple up the distal end of a saw blade (2), said front component being provided at the front end of the frame;
- a rear coupling component (6) which is connected to the handle and is intended to couple up the proximal end of the saw blade, said rear component being provided at the rear end of the frame; and
- a mechanism (7) for tensioning a saw blade when the latter is coupled to the front and rear coupling components;
the front and rear coupling components define, between them, an axial direction of sawing in which the saw blade extends when it is coupled to the front and rear coupling components,
the rear handle comprising a front linking member (13) and a rear gripping member (53),
**characterised in that** the rear member (53) comprises a first end which is articulated on the lower end part (12) of the front member (13) in such a way that the rear gripping member (53) is movable between a first gripping position of the "pistol" type which is suitable for forceful sawing and in which the second end of the rear member is substantially within the prolongation of the rear part (15) of the bow (3), and a second gripping position of the "finishing" type which is suitable for precision sawing and in which the second end of the rear member is at a distance from the prolongation of the rear part of the bow.

2. Saw frame according to claim 1, **characterised in that** the articulation of the rear member (53) comprises a pivot (64), the axis (Y-Y) of which is perpendicular to a joint plane which is itself inclined in relation to the axial direction of sawing.

3. Saw frame according to claim 2, **characterised in that** the inclination of the joint plane in relation to the axial direction of sawing is about 45°.

4. Saw frame according to any of claims 1 to 3, **characterised in that** the front member (13) and the rear member (53) comprise mutual-indexing means (67, 71) which are adapted to cooperate in such a way as to index the rear member in the first gripping position or in the second gripping position.

5. Saw frame according to any of claims 1 to 4, **characterised in that** the mechanism (7) for tensioning a saw blade comprises means for adjusting the tension device that can be activated by acting upon the rear handle member when the latter is in the second position, and especially can be activated by rotation about an axis (X-X) which is parallel to the axial direction of sawing.

6. Saw frame according to claims 4 and 5 taken together, **characterised in that** the tensioning mechanism (7) comprises braking means (37, 40) which impart to it a strong torque which is greater than that of the articulation of the rear member (53) when the indexing means (67, 71) are released.

7. Saw frame according to claim 6, **characterised in that** the braking means comprise raised ratcheting portions (40) belonging to the tensioning mechanism that cooperate with an elastically stressed retaining means (36) which is integral with the front member (13).

8. Saw frame according to one of claims 1 to 7, **characterised in that** it comprises reversible locking means (74, 75) that fasten the second end of the rear member (53) to the upper part (11) of the front member (13).

9. Saw frame according to claim 8, **characterised in that** the rear member (53) comprises a support (54) which is articulated to the lower end part (12) of the front member (13), and a supporting cap (55) for the palm of the hand, which cap is movable, in relation to the said support (54), between a position for making the cap integral with the upper part (11) of the front member (13), and a position for releasing said cap.

10. Saw frame according to claim 9, **characterised in that** the cap (55) is movable in translation in relation to the said support (54).

11. Saw frame according to claim 9 or 10, **characterised in that** a stressing means (73), especially a draw-spring, stresses the supporting cap (55) elastically in relation to the said support (54), and brings the locking means (74, 75) into engagement when the rear member (53) is disposed in the said first position.

12. Saw frame according to any of claims 1 to 11, **characterised in that** the articulation of the rear member (53) is suitable for enabling said rear member to be positioned in at least one third gripping position which is different from the said first and second positions.

13. Saw frame according to any of claims 1 to 12, **characterised in that** the bow (3) and the front member (13) are produced integrally from a single block, especially one made of cast aluminium.

14. Bow-saw, **characterised in that** it comprises a saw frame (1) according to any of claims 1 to 13, and at least one saw blade (2) which is suitable for being coupled to the said front (5) and rear (6) coupling components.

## Patentansprüche

1. Bügelsägengestell, umfassend:
- einen Bügel (3), der mit einem Handgriff (4) verbunden ist,
- ein vorderes Befestigungsmittel (5), das mit dem Bügel verbunden ist und an dem das entfernte Ende eines Sägeblatts (2) befestigt wird, wobei das vordere Befestigungsmittel am vorderen Ende des Gestells vorgesehen ist,
- ein hinteres Befestigungsmittel (6), welches mit dem Handgriff verbunden ist und an dem das nahe gelegene Ende des Sägeblatts befestigt wird, wobei das hintere Befestigungsmittel am hinteren Ende des Gestells vorgesehen ist, und
- einen Mechanismus (7), mit dem ein Sägeblatt unter Spannung gesetzt wird, wenn es an den vorderen und hinteren Befestigungsmitteln befestigt ist,
wobei zwischen den vorderen und hinteren Befestigungsmitteln eine axiale Sägerichtung definiert wird, entlang der sich das Sägeblatt erstreckt, wenn es an den vorderen und hinteren Befestigungsmitteln befestigt ist,
wobei der Handgriff ein vorderes Verbindungsstück (13) und ein hinteres Griffstück (53) aufweist,
**dadurch gekennzeichnet, dass** das hintere Griffstück (53) ein erstes Ende umfasst, das gelenkig auf dem unteren Endbereich (12) des vorderen Verbindungsstücks (13) angebracht ist, so dass das hintere Griffstück (53) zwischen einer ersten Griffposition vom "Revolver"-Typ, welche einem Sägen unter Kraftaufwendung angepasst ist und in der das zweite Ende des hinteren Griffstücks in etwa in der Verlängerung des hinteren Teils (15) des Bügels (3) verläuft, und einer zweiten Griffposition vom "Justierungs"-Typ, welche einem Präzisionssägen angepasst ist und in der das zweite Ende des hinteren Griffstücks von der Verlängerung des hinteren Bügelteils entfernt ist, beweglich ist.

2. Sägegestell gemäß Anspruch 1, **dadurch gekennzeichnet, dass** das Gelenk des hinteren Griffstücks (53) einen Drehzapfen (64) umfasst, dessen Achse (Y-Y) senkrecht zu einer Verbindungsebene verläuft, die ihrerseits in Bezug auf die axiale Sägerichtung geneigt ist.

3. Sägegestell gemäß Anspruch 2, **dadurch gekennzeichnet, dass** die Neigung der Verbindungsebene in Bezug auf die axiale Sägerichtung ungefähr 45° beträgt.

4. Sägegestell gemäß irgendeinem der Ansprüche 1 bis 3, **dadurch gekennzeichnet, dass** das vordere Verbindungsstück (13) und das hintere Griffstück (53) beiderseitige Verriegelungsmittel (67, 71) aufweisen, die ausgebildet sind, miteinander derart zusammen zu arbeiten, dass das hintere Griffstück in der ersten Griffposition oder in der zweiten Griffposition verriegelt wird.

5. Sägegestell gemäß irgendeinem der Ansprüche 1 bis 4, **dadurch gekennzeichnet, dass** der Mechanismus (7) mit dem ein Sägeblatt unter Spannung gesetzt wird, Mittel zur Einstellung der Spannungsvorrichtung umfasst, die durch Betätigung auf dem hinteren Griffstück des Handgriffs aktiviert werden können, wenn dieses sich in der zweiten Position befindet, die insbesondere durch Drehung um eine Achse (X-X) herum, die parallel zu der axialen Sägerichtung verläuft, aktiviert werden können.

6. Sägegestell gemäß beiden Ansprüchen 4 und 5 zusammen, **dadurch gekennzeichnet, dass** der Spannungsmechanismus (7) Bremsmittel (37, 40) umfasst, die ihm ein Widerstandsmoment verleihen, das höher ist als das Widerstandsmoment des Gelenks des hinteren Griffstücks (53), wenn die Verriegelungsmittel (67, 71) freigegeben sind.

7. Sägegestell gemäß Anspruch 6, **dadurch gekennzeichnet, dass** die Bremsmittel Einrastreliefs (40) des Spannungsmechanismus umfassen, die mit einem federnd beanspruchten Haltemittel (36) zusammen arbeiten, das mit dem vorderen Verbindungsstück (13) verbunden ist.

8. Sägegestell gemäß einem der Ansprüche 1 bis 7, **dadurch gekennzeichnet, dass** es reversible Verriegelungsmittel (74, 75) aufweist, die das zweite Ende des hinteren Griffstücks (53) mit dem oberen Teil (11) des vorderen Verbindungsstücks (13) verbinden.

9. Sägegestell gemäß Anspruch 8, **dadurch gekennzeichnet, dass** das hintere Griffstück (53) einen Träger (54), der gelenkig mit dem unteren Ende (12) des vorderen Verbindungsstücks (13) verbunden ist, und eine Kappe (55) zur Auflage der Handfläche, welche in Bezug auf den Träger (54) zwischen einer Position, in der die Kappe mit dem oberen Teil (11) des vorderen Verbindungsstücks (13) verbunden ist, und einer Position, in der die Kappe freigegeben ist, beweglich ist, umfasst.

10. Sägegestell gemäß Anspruch 9, **dadurch gekennzeichnet, dass** die Kappe (55) in Bezug auf den Träger (54) verschiebbar ist.

11. Sägegestell gemäß Anspruch 9 oder 10, **dadurch gekennzeichnet, dass** ein Beanspruchungsmittel (73), insbesondere eine Zugfeder, die Auflagekappe (55) in Bezug auf den Träger (54) federnd beansprucht und ein Ineinandergreifen der Verriegelungsmittel (74, 75) bewirkt, wenn sich das hintere Griffstück (53) in der ersten Position befindet.

12. Sägegestell gemäß irgendeinem der Ansprüche 1 bis 11, **dadurch gekennzeichnet, dass** das Gelenk des hinteren Griffstücks (53) ausgebildet ist, um die Positionierung des hinteren Griffstücks in wenigstens einer dritten Griffposition, die sich von der ersten und der zweiten Position unterscheidet, zu ermöglichen.

13. Sägegestell gemäß irgendeinem der Ansprüche 1 bis 12, **dadurch gekennzeichnet, dass** der Bügel (3) und das vordere Verbindungsstück (13) aus einem einzigen Materialblock, insbesondere aus geformtem Aluminium, gefertigt sind.

14. Bügelsäge, **dadurch gekennzeichnet, dass** sie ein Sägegestell (1) gemäß irgendeinem der Ansprüche 1 bis 13 und wenigstens ein Sägeblatt (2), welches für eine Befestigung in den vorderen und hinteren Befestigungsmitteln (5, 6) ausgebildet ist, umfasst.
